(19) Europäisches Patentamt
European Patent Office
Office européen des brevets

(11) **EP 2 300 982 B1**

(12) **EUROPEAN PATENT SPECIFICATION**

(45) Date of publication and mention
of the grant of the patent:
**22.07.2015 Bulletin 2015/30**

(51) Int Cl.:
***G06T 3/40*** *(2006.01)*

(21) Application number: **08874742.3**

(22) Date of filing: **14.08.2008**

(86) International application number:
**PCT/US2008/073203**

(87) International publication number:
**WO 2009/154644 (23.12.2009 Gazette 2009/52)**

(54) **IMAGE/VIDEO QUALITY ENHANCEMENT AND SUPER-RESOLUTION USING SPARSE TRANSFORMATIONS**

BILD-/VIDEOQUALITÄTSVERBESSERUNG UND SUPERAUFLÖSUNG UNTER VERWENDUNG VON DÜNN BESIEDELTEN TRANSFORMATIONEN

AMÉLIORATION ET SUPER-RÉSOLUTION DE LA QUALITÉ D'UNE IMAGE/VIDÉO À L'AIDE DE TRANSFORMATIONS ÉPARSES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.06.2008 US 140829**

(43) Date of publication of application:
**30.03.2011 Bulletin 2011/13**

(73) Proprietor: **NTT DoCoMo, Inc.**
**Chiyoda-Ku**
**Tokyo 100-6150 (JP)**

(72) Inventors:
• **KANUMURI, Sandeep**
**San Jose, CA 95132 (US)**
• **GULERYUZ, Onur, G.**
**San Francisco, CA 94107 (US)**
• **CIVANLAR, Reha**
**Palo Alto, CA 94301 (US)**

(74) Representative: **Manley, Nicholas Michael et al**
**WP Thompson**
**8th Floor**
**1 Mann Island**
**Liverpool L3 1BP (GB)**

(56) References cited:
**EP-A- 1 531 424**

• **C.S.BOON ET AL: "Sparse super-resolution reconstructions of video from mobile devices in digital TV broadcast application" PROC. OF THE SPIE, USA, vol. 6312, 15 August 2006 (2006-08-15), pages 63120M-1-63120M-12, XP002525249**
• **GULERYUZ O G: "Predicting wavelet coefficients over edges using estimates based on nonlinear approximants" DATA COMPRESSION CONFERENCE, 2004, SNOWBIRD, UT, USA MARCH 23-25, 2004, USA,IEEE, 23 March 2004 (2004-03-23), pages 162-171, XP010692186 cited in the application**
• **SEUNGHYEON RHEE ET AL: "Discrete cosine transform based regularized high-resolution image reconstruction algorithm" OPTICAL ENGINEERING, SPIE, USA, vol. 38, no. 8, August 1999 (1999-08), pages 1348-1356, XP002525250 ISSN: 0091-3286**
• **GULERYUZ O G: "Nonlinear approximation based image recovery using adaptive sparse reconstructions and iterated denoising-part I: theory" IEEE TRANS. ON IMAGE PROCESSING, USA, vol. 15, no. 3, March 2006 (2006-03), pages 539-554, XP002525251**
• **GULERYUZ O G: "Nonlinear approximation based image recovery using adaptive sparse reconstructions and iterated denoising-part II: adaptive algorithms" IEEE TRANS. ON IMAGE PROCESSING, USA, vol. 15, no. 3, March 2006 (2006-03), pages 555-571, XP002525252**

- JIJI C V ET AL: "Single frame image super-resolution: should we process locally or globally?" MULTIDIMENSIONAL SYSTEMS AND SIGNAL PROCESSING, KLUWER ACADEMIC PUBLISHERS, vol. 18, no. 2-3, 6 March 2007 (2007-03-06), pages 123-152, XP019506579
- MIN KYU PARK ET AL: "Super-resolution image reconstruction: a technical overview" IEEE SIGNAL PROCESSING MAGAZINE, USA, vol. 20, no. 3, 1 May 2003 (2003-05-01), pages 21-36, XP011097476
- HUNT B R: "Super-resolution of images: algorithms, principles, performances" INT. JOURNAL OF IMAGING SYSTEMS AND TECHNOLOGY, WILEY & SONS, NEW YORK, USA, vol. 6, no. 4, 21 December 1995 (1995-12-21), pages 297-304, XP001108818
- ANAMITRA MAKUR ET AL: "Warped Discrete-Fourier Transform: Theory and Applications", IEEE TRANSACTIONS ON CIRCUITS AND SYSTEMS PART I: REGULAR PAPERS, IEEE SERVICE CENTER, NEW YORK, NY, US, vol. 48, no. 9, 1 September 2001 (2001-09-01), XP011012378,
- GILGE M ET AL: "CODING OF ARBITRARILY SHAPED IMAGE SEGMENTS BASED ON A GENERALIZED ORTHOGONAL TRANSFORM", SIGNAL PROCESSING. IMAGE COMMUNICATION, ELSEVIER SCIENCE PUBLISHERS, AMSTERDAM, NL, vol. 1, no. 2, 1 October 1989 (1989-10-01), pages 153-180, XP000234866,

**Description**

## FIELD OF THE INVENTION

The present invention relates generally to image/video signal processing. More particularly, the present invention is related to enhancing the quality of and/or increasing the spatial resolution of image/video signals.

## BACKGROUND OF THE INVENTION

Image and video signal processing is widely used in a number of applications today. Often a need arises for an image or video of a particular resolution and only an image or video of a lower resolution is available. In such a case, there are a number of methods that are used to use the lower resolution version to create an image of higher resolution. These existing methods include applying linear or simple non-linear interpolation filters to the lower resolution image or video.

Examples of the use of linear or non-linear interpolation filters include a bilinear interpolation filter such as described in Gonzalez & Woods, "Digital Image Processing", Pearson Education, 2nd Edition; a linear interpolation filter described in ITU-T Recommendation H.264 & ISO/IEC 14496-10 (MPEG-4) AVC, "Advanced Video Coding for Generic Audiovisual Services", version 3: 2005; and a non-separable interpolation filter described in Vatis & Ostermann, "Locally Adaptive Non-Separable Interpolation Filter for H.264/AVC", IEEE ICIP, Oct. 2006.

However, each of these three techniques is applicable on image/video frames that have smoothly varying pixel values. This is because they are derived using smooth image models and the filters are typically restricted to lowpass filters. Thus, they are not applicable on many types of regions, such as on slant edges, textures etc. Furthermore, at least with respect to ITU-T Recommendation H.264 and Vatis & Ostermann, the techniques are applicable only in a video compression application where previous frame(s) shifted by a fraction of pixel is/are used to predict the current frame.

Also, very simple transform-based methods exist for increasing the resolution of an image/video, but require a large number of iterations. One such example is described in Guleryuz, "Predicting Wavelet Coefficients Over Edges Using Estimates Based on Nonlinear Approximants", Proc. Data Compression Conference, April 2004.

However, this technique is limited to block transforms with various simplifications that are not applicable on slant edges and textures and involves many iterations of a basic method to get good quality and the complexity is prohibitively expensive.

C.S. BOON et al: "Sparse super-resolution reconstructions of video from mobile devices in digital TV broadcast application", PROC. OF THE SPIE, USA, vol. 6312, 15 August 2006 (2006-08-15), pages 63120M-1-63120M-12 describes a mobile service scenario in which video programming is broadcast to low-resolution wireless terminals. A fast super-resolution technique is proposed that allows the mobile terminals to show a much enhanced version of the broadcast video on nearby high-resolution devices. The proposed single frame super-resolution algorithm uses recent sparse recovery results to provide high quality and high-resolution video reconstructions based on individual decoded frames provided by the low resolution broadcast.

## SUMMARY OF THE INVENTION

According to the present invention, there is a method comprising: receiving a first version of an image signal at a first resolution; and iteratively creating a second version of the image signal at a second resolution higher than or equal to the first resolution using at least one warped transform and spatially adaptive thresholding, wherein creating a second version of the image signal comprises: selecting sub-frames of a frame in the first version of the image signal, the sub-frame being either regular or adaptive, by minimizing the warped row variance, adaptively selecting the at least one warped transform for a sub-frame selected at each pixel, applying the at least one warped transform to the sub-frame to create transform coefficients, wherein support of the transform basis of the at least one warped transform is warped to match the sub-frame shape, and the sub-frame shape is determined based on measured statistics for each possible shape, performing spatially adaptive thresholding on the transform coefficients by applying at least one spatially adaptive threshold to the transform coefficients, wherein the threshold value adapts such that high-frequency detail in the frame is preserved, applying an inverse transform to threshold coefficients, combining all the processed sub-frames in a weighted fashion to form an output frame of the second version of the signal, and determining whether more iterations are needed.

## BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.

**Figure 1A** is a flow diagram of one embodiment of a process for performing quality enhancement/super-resolution of media.

**Figure 1B** is a block diagram of a system that illustrates an application scenario of one embodiment of the quality enhancement/super-resolution technique for compressed videos.

**Figure 1C** is a block diagram of a system that illustrates an application scenario of one embodiment of the quality enhancement/super-resolution technique for uncompressed videos.

**Figure 2** is a flow diagram of one embodiment of a process for enhancing quality and/or increasing resolution.

**Figure 3** is a flow diagram of one embodiment of an upsampling process.

**Figures 4A-4M** illustrate examples of masks that correspond to a library of sub-frame types.

**Figure 5** shows an example sub-frame $z_i$ at pixel $i$ when pixels are numbered in raster-scan order.

**Figure 6 is** a flow diagram of one embodiment of sub-frame selection processing.

**Figure 7** is a flow diagram of one embodiment of a transform selection process for a sub-frame.

**Figure 8** is a flow diagram of one embodiment of a thresholding process for thresholding transform coefficients.

**Figure 9** illustrates a monotonic decreasing stair-case function.

**Figure 10** is a flow diagram of one embodiment of a process for combining sub-frames to form a frame.

**Figure 11** is a dataflow diagram of one embodiment of a data consistency operation.

**Figure 12** is a block diagram of an exemplary computer system.

**Figures 13A-E** illustrate sample subsets of selected pixels.

## DETAILED DESCRIPTION OF THE PRESENT INVENTION

An enhancement technique to enhance the quality of video and/or images is described. In one embodiment, the technique also acts as a super-resolution technique to generate a high-resolution image and/or video corresponding to a low-resolution input image and/or video, respectively. In one embodiment, this is accomplished by adding multiple pixel positions for each pixel position in the low-resolution image and/or video. For purposes herein, the pixel positions that are added are known as interpolated positions and the positions that come from the low-resolution image are known as original positions.

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention. Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

Overview

Fast and high performance quality enhancement and/or super-resolution techniques for media (e.g., images, videos, etc.) are disclosed. These techniques allow the rendering of high-quality and high-resolution (if necessary) media (e.g., images, videos, etc.) from low-quality, low-resolution images and videos. In one embodiment, these techniques enable high-quality super-resolution reconstruction (zooming) of video sequences.

In one embodiment, as a super-resolution technique, a higher resolution of media is created using warped transforms and adaptive thresholding. For warped transforms, the transform is warped to align with an edge, resulting in a sparse representation on directional edges and corners. The use of warped transforms results in increased sharpness along directional edges and corners when compared to prior art technologies. In one embodiment, warped transforms are selected, based on local edge direction, to render the highest quality output video. This selection may occur independently at every pixel or together for a block of pixels. Example block sizes are 2x2, 3x3, 4x4, 2x4, 4x2, etc..

The use of spatially adaptive thresholds enables modulation of the threshold according to the local signal statistics, which allows achieving very high quality with simply two iterations. This is far less that some prior art techniques that requires 10's of iterations to achieve similar quality.

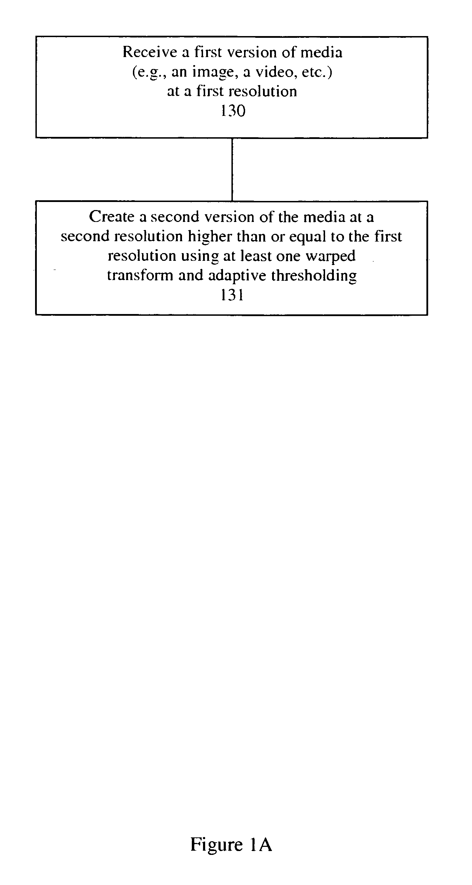

Figure 1A is a flow diagram of one embodiment of a process for performing quality enhancement/super-resolution reconstruction of media. The process is performed by processing logic that may comprise hardware (circuitry, dedicated logic, etc.), software (such as is run on a general purpose computer system or a dedicated machine), or a combination of both.

Referring to Figure 1A, the process begins by processing logic receiving a first version of media (e.g., an image, a video, etc.) at a first resolution (processing block 130). After receiving the first version of the media, processing logic creates a second version of the media at a second resolution higher than or equal to the first resolution using at least one warped transform and adaptive thresholding (processing block 131). In one embodiment, the creation of the second version occurs as a result of an iterative process. In one embodiment, the iterative process only goes through two iterations.

In one embodiment, creating a second version of the media is performed by applying the at least one warped transform (e.g., a 2-D separable DCT) to a sub-frame to create transform coefficients. In one embodiment, the method includes selecting sub-frames adaptively in an image created by upsampling the first version of the media, such that applying the warped transform to a sub-frame to create transform coefficients comprises applying a transform to each of the selected sub-frames in the image. In one embodiment, the sub-frames are adaptively selected at each pixel in the image.

In one embodiment, the adaptive thresholding includes application of spatially adaptive thresholds, and creating the second version of the media comprises computing an adaptive threshold and thresholding transform coefficients with the adaptive thresholds.

In one embodiment, the super-resolution technique includes selecting a 2-D filter and upsampling the input image/video frame using the 2-D filter; selecting a sub-frame starting at any pixel of the upsampled frame and, at each pixel in the upsampled frame, forming a sub-frame and applying a pixel-adaptive warped transform on the sub-frame; deriving a detail-preserving adaptive threshold for each sub-frame and thresholding the transform coefficients of this sub-frame using hard thresholding (e.g., set to zero if magnitude of transform coefficients is less than the threshold) or other methods such as soft-thresholding, and applying an inverse transform to the thresholded transform coefficients to form processed sub-frames; performing a combination operation on the processed sub-frames to obtain a better estimate of the upsampled frame; and optionally performing a correction operation on the upsampled frame to achieve data consistency between the upsampled frame and input frame. These operations constitute one iteration and produce a super-resolution estimate. In one embodiment, the operations from sub-frame selection to correction are repeated to further refine the super-resolution estimate.

In one embodiment, the quality enhancement technique includes selecting a sub-frame starting at any pixel of the input image/video frame and, at each pixel in the input frame, forming a sub-frame and applying a pixel-adaptive warped transform on the sub-frame; deriving a detail-preserving adaptive threshold for each sub-frame and thresholding the transform coefficients of this sub-frame using hard thresholding (e.g., set to zero if magnitude of transform coefficients is less than the threshold) or other methods such as soft-thresholding, and applying an inverse transform to the thresholded transform coefficients to form processed sub-frames; performing a combination operation on the processed sub-frames to obtain an enhanced quality version of the input frame. These operations constitute one iteration and produce an enhanced quality estimate. In one embodiment, the entire process is repeated to further enhance the quality.

In one embodiment, the techniques described herein increase resolution by arbitrary factors. That is, the use of the super-resolution technique is not limited to integer multiples (e.g., 2X, 3X, etc.) for an increase in resolution. The super-resolution technique can increase resolution by any factor (e.g., 1.2X, 1.5X, 2.6X, etc.).

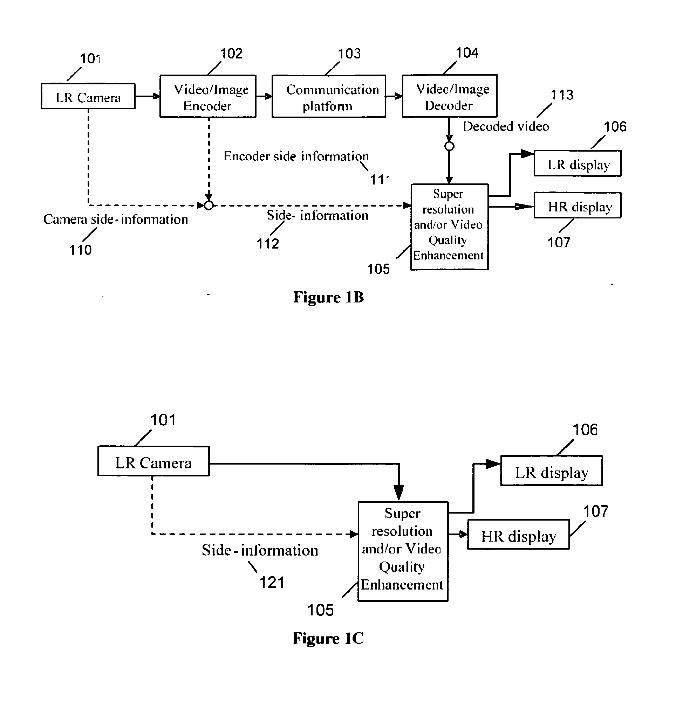

In one embodiment, the techniques described herein are applied to compressed/uncompressed image/video signals with or without the help of side-information. Figure 1B is a block diagram of a system that illustrates an application scenario of one embodiment of the techniques described herein for compressed videos. Each of the blocks may comprise hardware (circuitry, dedicated logic, etc.), software (such as is run on a general purpose computer system or a dedicated machine), or a combination of both. Referring to Figure 1B, low resolution (LR) camera 101 captures low-resolution image/video which is sent to a video/image encoder 102 for compression. The encoded video is transported in space and/or time using a communication platform 103 and sent to a video/image decoder 104 for decompression. The decoded video 113 is sent to super-resolution generator and/or video quality enhancer 105 for processing described herein. The output of super-resolution generator and/or video quality enhancer 105 is sent to a display such as LR display 106 or high resolution (HR) display 107. In one embodiment, LR camera 101 and encoder 102 send camera side-information 110 and encoder side-information 111 (shown as dashed lines), which are combined to form side-information 112, that can be used by super-resolution generator and/or video quality enhancer 105. The side-information may consist of any of the parameters (e.g., information about LR camera 101 (e.g., lens type), quantization step size, etc.) or choice/mode decisions for the quality enhancement and super-resolution techniques. For example, certain side-information may help determine which interpolation technique should be used. The side-information may include default settings. In this manner, the side-information allows the techniques described herein to be customized to different settings. In one embodiment, side-information is a vector of values, which represent the different choices. One simple way to signal the side-information is as follows: let OP denote the vector representing side-information. Each choice is signaled using two elements in the vector. For the nth choice, $OP(2*n-1) = \begin{cases} 0, & \text{choice is not signalled} \\ 1, & \text{choice is signalled} \end{cases}$ and $OP(2*n)$

= value representing the choice. $OP(2*n)$ needs to be set and is used only when $OP(2*n-1) = 1$.

Figure 1C is a block diagram of a system that illustrates an application scenario of one embodiment of the techniques described herein for uncompressed videos. Each of the blocks may comprise hardware (circuitry, dedicated logic, etc.), software (such as is run on a general purpose computer system or a dedicated machine), or a combination of both. Referring to Figure 1C, LR camera 101 captures a low-resolution image/video which is sent to super-resolution generator and/or video quality enhancer 105 for processing described herein. The output of super-resolution generator and/or video quality enhancer 105 is sent to a display such as LR display 106 or HR display 107. In one embodiment, LR camera 101 sends side-information 121 (shown as dashed line) that can be used by super-resolution generator and/or video quality enhancer 105. The side-information may consist of any of the parameters (e.g., information about LR camera 101) or choice/mode decisions for the quality enhancement and super-resolution techniques as described above. As discussed above, the side-information allows the quality enhancement and super-resolution techniques to be customized to different settings.

One Embodiment of the Quality Enhancement/Super-Resolution Technique

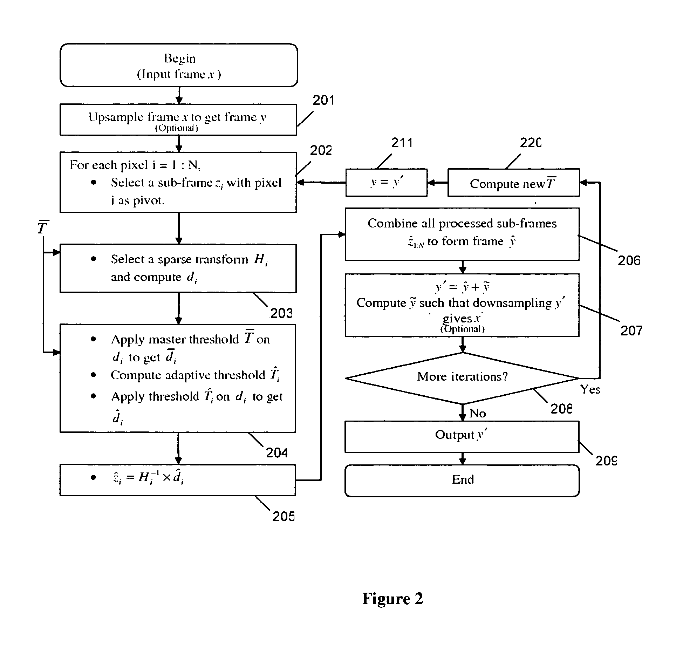

Figure 2 is a flow diagram of one embodiment of a process for performing quality enhancement and increasing resolution. The process is performed by processing logic that may comprise hardware (circuitry, dedicated logic, etc.), software (such as is run on a general purpose computer system or a dedicated machine), or a combination of both.

Referring to Figure 2, $x$ denotes the input image/video frame of low resolution (LR). In one embodiment, all image/video frames are represented as vectors by arranging the pixels in raster scan order. Alternatively, the data can be represented and/or stored as a vector, matrix, or in any other format.

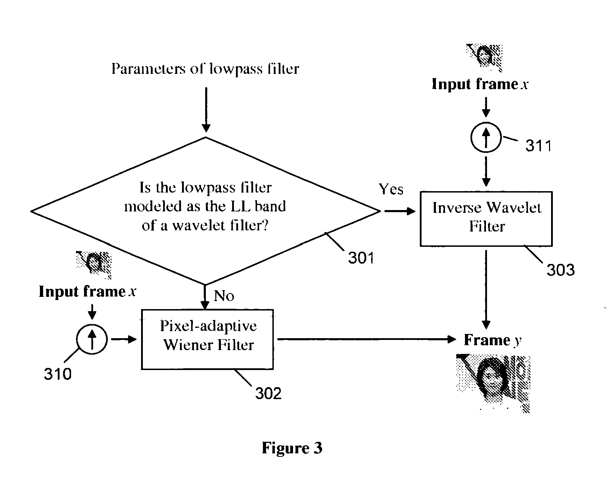

Initially, processing logic upsamples input frame $x$ to obtain upsampled frame $y$ (processing block 201). The upsampling may be performed using an upsampling 2-D filter chosen to derive the upsampled version ($y$) of input frame $x$. Figure 3 illustrates one embodiment of the upsampling process and will be described in more detail below. Note that this operation is optional when using the techniques described herein for quality enhancement. When this operation is not performed, frame $y$ is set to be equal to frame $x$.

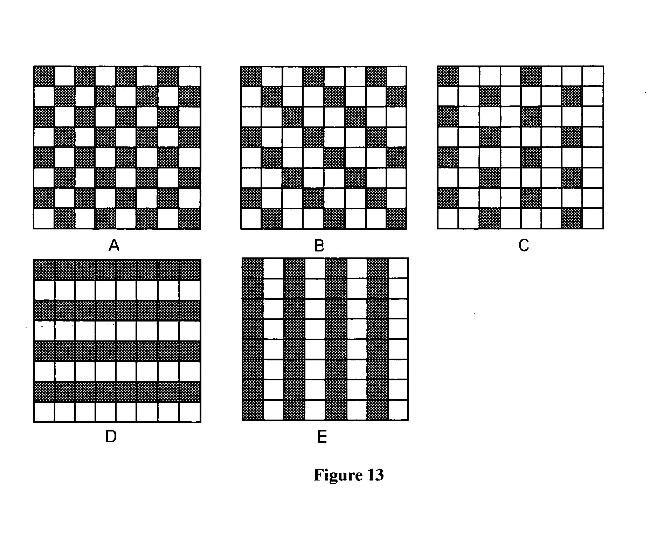

After upsampling the input frame x to obtain upsampled frame $y$, processing logic selects a subframe $z_i$, for each pixel i=1:N, with pixel i as a pivot (processing block 202). N represents the number of pixels in $y$. In this embodiment, a sub-frame is formed and processed for each pixel in the image. However, in another embodiment, the processing may be performed only on a selected subset of the pixels and not on all the pixels in the image. The subset may be predetermined or signaled as part of the side-information. Figures 13A-E illustrate examples of such subsets; other subsets may be used with the teachings described herein.

After selecting the sub-frame $z_i$ with pixel i as a pivot, processing logic selects a transform $H_i$ and computes coefficients $d_i$ by applying the transform $H_i$ on sub-frame $z_i$ (processing block 203). In one embodiment, the transform is a 2-D DCT. In another embodiment, the transform is a 2-D Hadamard transform. The master threshold is an input which can be used to select the transform.

After generating coefficients $d_i$, processing logic applies a master threshold $\overline{T}$ on coefficients $d_i$ to obtain $\overline{d}_i$, computes an adaptive threshold $\hat{T}_i$ and applies the adaptive threshold $\hat{T}_i$ on coefficients $d_i$ to adaptively threshold them to obtain $\hat{d}_i$ (processing block 204). Processing logic then applies an inverse transform $H_i^{-1}$ to thresholded coefficient $\hat{d}_i$ to obtain processed sub-frame $\hat{z}_i$ (processing block 205). Next, processing logic combines all the processed sub-frames $\hat{z}_{1:N}$ corresponding to all pixels in a weighted fashion to form frame $\hat{y}$ (processing block 206). Then processing logic performs a data consistency step on frame $\hat{y}$ to get frame y' (processing block 207). The data consistency step is defined as:

$$y^1 = \hat{y} + \tilde{y}$$

Processing logic computes $\hat{y}$ such that the downsampling of y' gives input frame x. Note that this operation is optional when using the techniques described herein for quality enhancement. When this operation is not performed, frame y' is set to be equal to frame $\hat{y}$.

Afterwards, processing logic determines whether more iterations are needed (processing block 208). In one embodiment, the number of iterations is 2. The actual number of iterations can be signaled as part of the side-information. If so, the process transitions to processing block 220 where processing logic computes a new master threshold $\overline{T}$ and sets frame y equal to y' (processing block 211), and thereafter the process transitions to processing block 202. If processing logic determines that no more iterations are necessary, the process transitions to processing block 209 where processing logic outputs frame y' and the process ends. Note that in one embodiment, the linear interpolation operation of processing block 201 and data consistency operation of processing block 206 are optional. If the linear interpolation operation is not performed, (e.g., by disabling the linear interpolation module), the output resolution of the video/image is the same as the input resolution. Thus, under this embodiment, the quality of the video/image is enhanced, but there is no super-resolution.

*The Upsampling Process*

The upsampling filter can be chosen in a variety of ways to reverse the lowpass filtering caused either by a downsampling operation or due to physical limitations of the input device. Where the input device is a camera, these may include, but not limited to, native resolution, optical focus and shutter speed. In one embodiment, this lowpass filtering is modeled as an arbitrary finite-tap filter or as the LL band of a wavelet filter such as, for example, a Daubechies or Le Gall wavelet. In one embodiment, the lowpass filter is modeled as Daubechies 7/9 wavelet and the corresponding inverse wavelet filter is used to obtain frame y. Note that embodiments of the present invention are not limited to Upsampling filters derived using these methods. Modules that can increase the resolution of an image/video can be used, including, but not limited to, any upsampling filters such as bilinear, bicubic, and H.264 interpolation filters.

The parameters that define the lowpass filter and/or the upsampling filter can be included in the side-information (e.g., side information 112, side information 121, etc.).

In one embodiment, when the lowpass filter is modeled as a wavelet filter (LL band), the Upsampling filter is the inverse wavelet filter, and when the lowpass filter is modeled as an arbitrary finite-tap filter, the upsampling filter is the Wiener filter that is optimal in the MSE between an original frame and the frame obtained by passing the original frame through the lowpass and upsampling, filters consecutively. In one embodiment, the optimal filter depends on the original frame and is signaled independently for each pixel using side-information.

In one embodiment, the input frame x is upsampled and filtered using either an inverse wavelet filter or a pixel adaptive Wiener filter to obtain frame y. Figure 3 is a flow diagram of one embodiment of an upsampling process. The process is performed by processing logic, that may comprise hardware (circuitry, dedicated logic, etc.), software (such as is run on a general purpose computer system or a dedicated machine), or a combination of both.

Referring to Figure 3, using the parameters of a lowpass filter, processing logic determines whether the low pass filter is modeled as the LL band of the wavelet filter (processing block 301). This allows the processing logic to classify the low pass filter as a wavelet filter or not. If processing logic determines that the lowpass filter is a wavelet filter, processing logic upsamples the input frame x with upsampler 311 and applies an inverse wavelet filter to input frame *x* to obtain frame *y* (processing block 303). If processing logic determines the lowpass filter is not a wavelet filter, processing logic upsamples the input frame x with upsampler 310 and applies a pixel-adaptive Wiener filter to input frame x to obtain frame *y* (processing block 302).

*The Sub-Frame Selection Process*

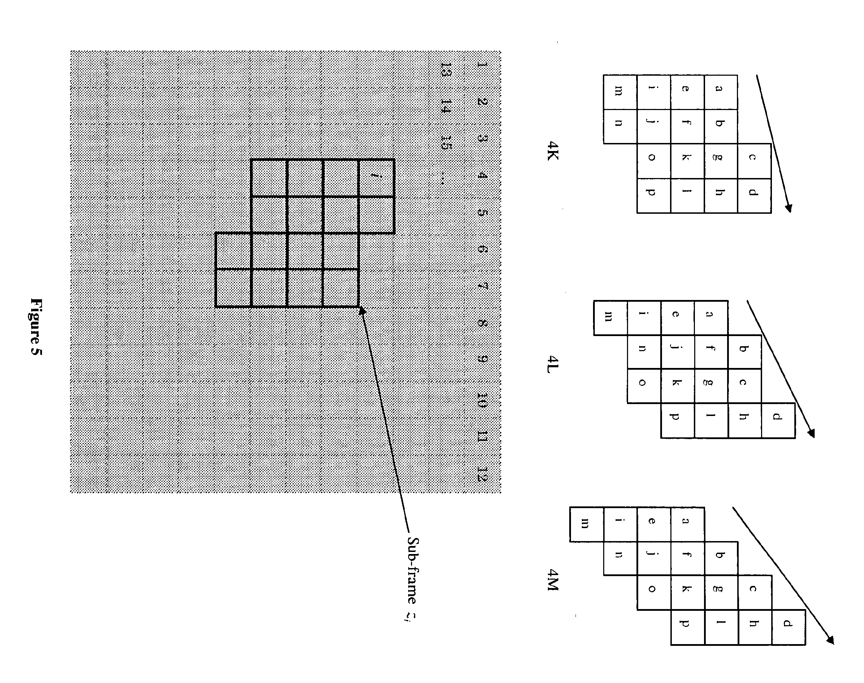

After the upsampling process is complete and frame y has been obtained, the sub-frame selection process of processing block 202 of Figure 2 begins. A sub-frame type *S* is defined as an $M^2 \times 1$ integer-valued vector. For purposes herein, M can be any integer greater than zero. $\{S^1, S^2, S^3, ...\}$ is a library of sub-frame types. For each selected pixel i in frame *y* where pixels are numbered in raster-scan order, a sub-frame type $s_i$ is selected from the library and a vector $p_i$ is formed as $p_i = s_i + i \times \overline{1}$, where $\overline{1}$ is an $M^2$ - x 1 vector with all elements equal to 1. In one embodiment, for pixels that are not selected, $p_i$ is a vector of zeros. An $M^2 \times 1$ vector $z_i$ called a sub-frame is formed with pixel values of frame *y* at locations corresponding to elements of $p_i$. Pixel i is called the pivot for sub-frame $z_i$. Figure 5 shows an example sub-frame $z_i$ at pixel i when pixels are numbered in raster-scan order. Referring to Figure 5, the raster-scan ordering of pixels occurs by numbering pixels starting from "1" in that order. A sub-frame is shown pivoted at pixel i. A sub-frame is organized into M vectors called warped rows. The first warped row has the sub-frame elements 1 to M in that order; the second warped row has the elements (M+1) to 2M; and so on.

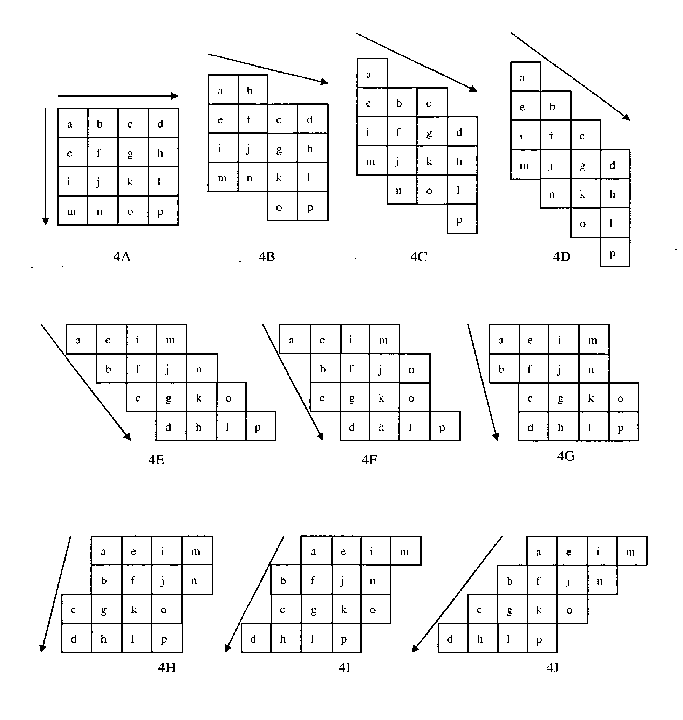

In one embodiment, M is equal to 4 and the library of sub-frame types correspond to a set of masks illustrated in Figures 4A-4M. Referring to Figures 4A-4M, with this library of sub-frames, the masks correspond to different directions as shown with arrows. The mask in Figure 4A is referred to herein as a regular mask because it corresponds to the regular horizontal or vertical directions. The other masks are called directional masks since they correspond to non-trivial directions. The differential-position ($\Omega$) of a pixel ('a' to 'p') in a mask is defined as $\Omega = C_C + W \times C_R$, where W is the width of frame *y*. $C_C$ is the number of columns one needs to move horizontally to the right starting from the column of pixel 'a' to get to the column of the current pixel of interest. $C_R$ is the number of rows one needs to move vertically down starting from the row of pixel 'a' to get to the row of the current pixel of interest. For example, in the case of the mask in Figure 4H, pixel 'c' has $C_C$ = -1 and $C_R$ = 2. The sub-frame type corresponding to a mask is the vector containing the differential-positions of pixels in that mask ordered from 'a' to 'p'.

In one embodiment, the choice of the sub-frame type for a pixel is made by choosing the sub-frame type corresponding to the regular mask always. In another embodiment, the choice of the sub-frame type for a pixel is made, for each selected pixel, (1) by evaluating, for each sub-frame type, a 2-D DCT over the sub-frame formed, and (2) by choosing, for a given threshold *T*, the sub-frame type that minimizes the number of non-zero transform coefficients with magnitude greater than *T*. In yet another embodiment, the choice of the sub-frame type for a pixel is made by choosing, for each selected pixel, the sub-frame type that minimizes the warped row variance of pixel values averaged over all warped rows. In still another embodiment, the choice of the sub-frame type for a pixel is made by having, for a block of $K \times L$ pixels, each pixel vote for a sub-frame type (based on the sub-frame type that minimizes the warped row variance of pixel values averaged over all warped rows) and choosing the sub-frame type with the most votes for all the pixels in the $K \times L$ block, where K and L can be any integers greater than 0. In one embodiment, K and L are all set to be 4. In still another embodiment, the choice of the sub-frame type for a pixel is made by forming, for each pixel, a block of $K \times L$ pixels and choosing a sub-frame type by using the preceding voting scheme on this block. In each case, the chosen sub-frame type is used for the current pixel. Thus, by using one of these measured statistics for each mask, the selection of a subframe is performed.

Note that masks other than those in Figures 4A-4M may be used.

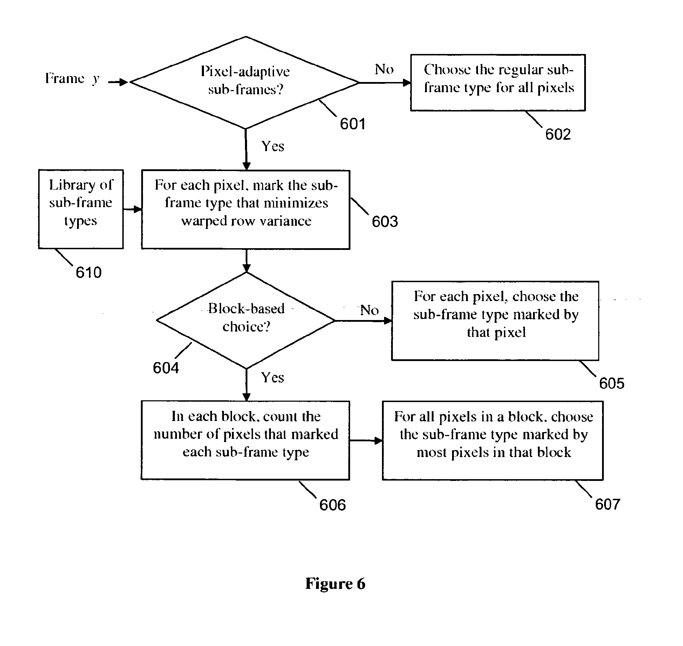

Figure 6 is a flow diagram of one embodiment of sub-frame selection processing. The process is performed by processing logic that may comprise hardware (circuitry, dedicated logic, etc.), software (such as is run on a general purpose computer system or a dedicated machine), or a combination of both.

Referring to Figure 6, the process begins by processing logic receiving frame *y* and determining whether the sub-frames are pixel-adaptive (processing block 601). If the sub-frames are not pixel-adaptive, processing logic chooses the regular sub-frame type for all pixels (processing block 602). If the sub-frames of sub-frame *y* are pixel adaptive, processing logic, for each pixel, marks the sub-frame type that minimizes the warped row variance (processing block 603). This is done using the library of sub-frame types (620) as described above. Thus, for each pixel, the sub-frame type that minimizes the warped row variance among the library of sub-frame types is marked.

Next, processing logic determines whether the choice is block-based (processing block 604). If processing logic determines the choice is block-based, processing logic counts the number of pixels that marked each sub-frame type in each block (processing block 606) and, for all pixels in a block, processing logic chooses the sub-frame type marked by most pixels in that block (processing block 607). In other words, if the choice is block-based, the sub-frame type marked by most pixels in a block is chosen for all pixels in that block. If processing logic determines the choice is not block-based, processing logic chooses, for each pixel, the sub-frame type marked by that pixel (processing block 605). In other words, each pixel chooses the sub-frame type marked by itself.

The choice of the sub-frame types for each pixel can be part of the side-information.

*Transform Selection and Application*

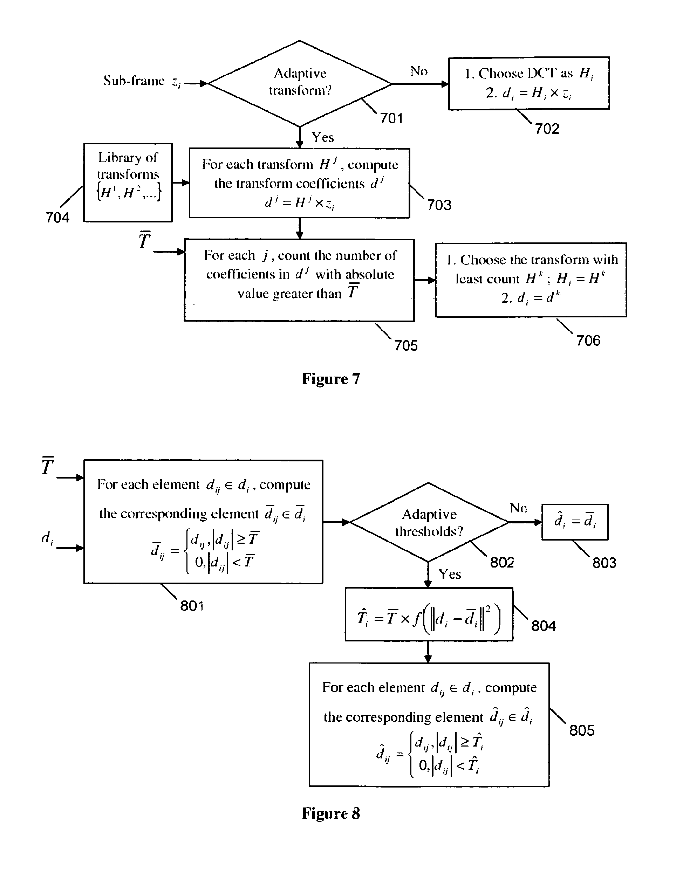

After selecting the sub-frame $z_i$, the sub-frame $z_i$ is transformed into $d_i$ using a pixel-adaptive warped transform $H_i$. The transform is referred to herein as 'warped' because the support of the transform basis has warped to match the sub-frame shape. The transform is referred to as pixel-adaptive because sub-frames pivoted at different pixels can use different transforms in addition to the fact that the choice of sub-frame type can vary from pixel to pixel. In one embodiment, the transform $H_i$ is chosen from a library of transforms such as, for example, a separable 2-D Hadamard, a separable DCT, a non-separable DCT, 2-D Gabor wavelets, Steerable pyramids, 2-D directional wavelets, Curvelets and Contourlets. It should be noted that a separable transform becomes non-separable after it is warped. The choice can be fixed apriori or adaptive to the different sub-frames pivoted at different pixels. In one embodiment, in the adaptive case, the chosen transform is the one that has the least number of coefficients with absolute value greater than a master threshold $\overline{T}$. In one embodiment, the choice of the transforms is part of the side-information. A flow diagram of one embodiment of a transform selection process for a sub-frame is illustrated in Figure 7.

Referring to Figure 7, the process is performed by processing logic that may comprise hardware (circuitry, dedicated logic, etc.), software (such as is run on a general purpose computer system or a dedicated machine), or a combination of both. The process begins by processing logic testing whether the transform is pixel-adaptive (processing block 701). This test may be performed by referring to a list. In one embodiment, the list can be such that the transform is non-adaptive. In another embodiment, the list can be signaled as part of side-information. If processing logic determines that the transform is not pixel-adaptive, processing logic selects a 2-D orthonormal separable DCT for use as the transform and generates the transform coefficients $d_i$ by applying the transform to the sub-frame $z_i$ (processing block 702).

If processing logic determines the transform is pixel-adaptive, then, for each transform $H^j$ in the library of transforms { $H^1, H^2, \ldots$ } (processing block 703), processing logic computes the transform coefficients $d^j$ using the formula:

$$d^j = H^j \times z_i.$$

The transform coefficients $d^j$ correspond to the transform $H^j$.

Next, for each $j$, processing logic counts the number of coefficients in $d^j$ with an absolute value greater than a master threshold $\overline{T}$ (processing block 705) and chooses the transform from the library of transforms with the least count $H^k$, sets the transform $H_i$ equal to the transform corresponding to the least count ($H^k$), and then sets the coefficients $d_i$ equal to the transform coefficients $d^k$ (processing block 706).

*Thresholding*

As part of the thresholding process that occurs after selecting the transform, in one embodiment, a detail-preserving adaptive threshold $\hat{T}_i$ is applied on the transform coefficients $d_i$ to obtain $\hat{d}_i$. The threshold $\hat{T}_i$ is referred to herein as detail-preserving since its value adapts such that high-frequency detail in the image/video frame is preserved. The transform coefficients $d_i$ are also thresholded using a master threshold $\overline{T}$ to obtain $\overline{d}_i$. The thresholding operation can be done in a variety of ways. In one embodiment, the thresholding operation is performed using hard thresholding. In another embodiment, the thresholding operation is performed using soft thresholding. The hard thresholding operation is defined as $HT(x) = \begin{cases} x, |x| \ge T \\ 0, |x| < T \end{cases}$, where T is the threshold used. Similarly, the soft thresholding operation with T as the threshold is defined as $ST(x) = \begin{cases} x - T, x \ge T \\ x + T, x \le -T \\ 0, |x| < T \end{cases}$.

The results of thresholding may be compared to the energy lost. If too much of the signal energy is lost, the threshold may be too high for this particular area and, thus, might have to be reduced.

In alternative embodiments, the threshold $\hat{T}_i$ is computed in one of the following ways:

$$\hat{T}_i = \overline{T}$$

$$\hat{T}_i = f\left(\overline{T}, \sum_{j=1}^{N}\left\|d_j - \overline{d}_j\right\|^2\right),$$

where $f(\ )$ represents a function.

$$\hat{T}_i = f\left(\overline{T}, \left\|d_i - \overline{d}_i\right\|^2\right),$$

where $f(\ )$ represents a function.

$$\hat{T}_i = \overline{T} \times f\left(\left\|d_i - \overline{d}_i\right\|^2\right).$$

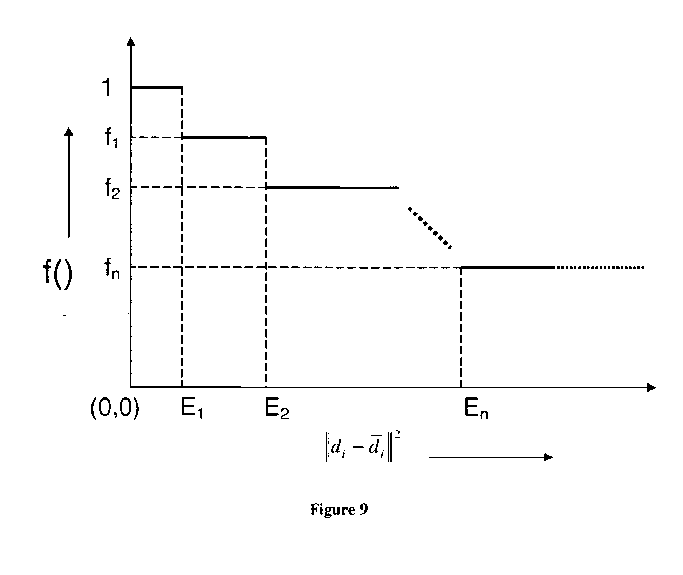

The function $f(\ )$ is a monotonic decreasing stair-case function as illustrated in Figure 9. In one embodiment, the function used is a lookup table, which can be part of the side-information. Referring to Figure 9, the shape of a monotonic decreasing staircase function used in the adaptive thresholding process is shown. The parameters $(f_1, f_2, ..., f_n)$ and $(E_1, E_2, E_n)$ completely define the function. The step positions of the function $(f_1, f_2, ..., f_n$ and $E_1, E_2, ..., E_n)$ are tuned on a training set to achieve a local optimum in reconstructed image/video quality.

Perform a search on possible values for $\hat{T}_i$ to minimize the number of non-zero elements in $\hat{d}_i$ such that $\|d_i - \hat{d}_i\|^2 < E_{local}$, where local refers to a local portion of the image, as opposed to the entire image. $E_{local}$ can be part of the side-information or default values may be used. This can be viewed as a setting for the algorithm. In one embodiment, a default value can be obtained by tuning on a training set and choosing the value that achieves a local optimum in reconstructed image/video quality.

Perform a joint search on possible values for $(\hat{T}_1, \hat{T}_2, ..., \hat{T}_N)$ to minimize the total number of non-zero elements in $\hat{d}_k$ summed over all $k \in \{1,2,..., N\}$ such that $\sum_{j=1}^{N}\left\|d_j - \hat{d}_j\right\|^2 < E_{global}$, where global refers to the image as a whole. $E_{global}$ can be part of the side-information or default values may be used. This can be viewed as a setting for the algorithm. In one embodiment, a default value can be obtained by tuning on a training set and choosing the value that achieves a local optimum in reconstructed image/video quality. In one embodiment, the option $\hat{T}i = \overline{T} \times f$ $(\|d_i - \overline{d}_i\|^2)$ is used and hard thresholding is used for the thresholding operation. The different parameters in the thresholding process can be part of the side-information.

Figure 8 is a flow diagram of one embodiment of a thresholding process for thresholding transform coefficients $d_i$. The process is performed by processing logic that may comprise hardware (circuitry, dedicated logic, etc.), software (such as is run on a general purpose computer system or a dedicated machine), or a combination of both.

Referring to Figure 8, the process begins using a master threshold $\overline{T}$ and coefficients $d_i$ as inputs, and processing logic, for each element $d_{ij} \in d_i$, computing the corresponding element $\overline{d}_{ij} \in \overline{d}_i$ according to the following equation:

$$\overline{d}_{ij} = \begin{cases} d_{ij}, & \left|d_{ij}\right| \geq \overline{T} \\ 0, & \left|d_{ij}\right| < \overline{T} \end{cases}$$

(processing block 801). In this manner, processing logic sets to zero all coefficients with absolute values less than the master threshold $\overline{T}$ and these coefficients are stored as $d_i$.

Next, processing logic determines whether the thresholds are adaptive (processing block 802). This test may be performed by referring to a list. In one embodiment, the list can be such that the thresholds are non-adaptive. In another embodiment, the list can be signaled as part of side-information. If processing logic determines that adaptive thresholds are not used, processing logic copies the output coefficient $\hat{d}_i$ directly from $\bar{d}_i$ (processing block 803). If processing logic determines that adaptive thresholds are used, processing logic computes the adaptive threshold $\hat{T}_i$ as a product of master threshold $\bar{T}$ and a monotonically decreasing function of absolute value $\|d_i - \bar{d}_i\|^2$ (the L-2 norm between $d_i$ and $\bar{d}_i$) as follows:

$$\hat{T}_i = \bar{T} \times f\left(\left\|d_i - \bar{d}_i\right\|^2\right)$$

(processing block 804). Then processing logic computes, for each element, the corresponding element $d_{ij} \in d_i$ according to the formula:

$$\hat{d}_{ij} = \begin{cases} d_{ij}, & |d_{ij}| \geq \hat{T}_1 \\ 0, & |d_{ij}| < \hat{T}_1 \end{cases}$$

(processing block 805). Thus, in this manner, all coefficients $d_{ij}$ with absolute values less than $T_1$ are set to zero and stored as $d_{ij}$.

*Combining Sub-frames*

After applying the inverse transform to the thresholded coefficients, all of the processed sub-frames are combined in a weighted fashion to form frame $y$. In one embodiment, a weight $w_i$ is computed for each processed sub-frame $z_i$. In alternative embodiments, this is computed in one of the following ways: $w_i = f(\bar{T}, \hat{T}_i)$, where $f(\ )$ represents a function. An example of such a function is $\dfrac{\hat{T}_i}{\bar{T}}$ $w_i = f(d_i, \hat{d}_i)$, where $f(\ )$ represents a function. MSE option:

$$w_i = \begin{cases} \dfrac{1}{\left\|d_i - \hat{d}_i\right\|^2}, & \left\|d_i - \hat{d}_i\right\|^2 > e_{min} \\ \dfrac{1}{e_{min}}, & \left\|d_i - \hat{d}_i\right\|^2 \leq e_{min} \end{cases}$$

,, where $e_{min}$ is a constant. L-$p$ Norm option ($p \geq 0$):

$$w_i = \begin{cases} \dfrac{1}{\left\|\hat{d}_i\right\|_p}, & \left\|\hat{d}_i\right\|_p > n_{min} \\ \dfrac{1}{n_{min}}, & \left\|\hat{d}_i\right\|_p \leq n_{min} \end{cases}$$

, , where $n_{min}$ is a constant.

$w_i = g(\|\hat{d}_i\|_p)$, where $p \geq 0$ and the function $g(\ )$ is a monotonic decreasing stair-case function similar to the function $f(\ )$ illustrated in Figure 9. The step positions of the function ($f_1, f_2, ..., f_n$ and $E_1, E_2, E_n$) are tuned on a training set to achieve a local optimum in reconstructed image/video quality.

$w_i = g(\|d_i - \hat{d}_i\|_p)$, where $p \geq 0$ and the function $g(\ )$ is a monotonic decreasing stair-case function similar to the function $f(\ )$ illustrated in Figure 9. The step positions of the function ($f_1, f_2, f_n$ and $E_1, E_2, ..., E_n$) are tuned on a training set to achieve a local optimum in reconstructed image/video quality.

The calculated weight $w_i$ can be part of the side-information.

The processed sub-frames $\hat{z}_{1:N}$ (corresponding to all pixels) are combined together to form $\hat{y}$ in a weighted manner. One embodiment of this process is described for $\hat{y}_j$, which is the value of the $j^{th}$ pixel.

Set $\hat{y}_j = 0$ and $n_j = 0$ , where $n_j$ is the normalization coefficient for $j^{th}$ pixel.

For each processed sub-frame $\hat{z}_i$

If pixel j is part of $p_i$

$k$ = index of pixel j in $p_i$.
$\hat{y}_j = \hat{y}_j + w_i \times \hat{z}_{ik}$, where $\hat{z}_{ik}$ is the value of pixel j in the processed sub-frame $\hat{z}_i$.
$n_j = n_j + w_i$.

$$\hat{\hat{y}}_j = \frac{\hat{\hat{y}}_j}{n_j}$$

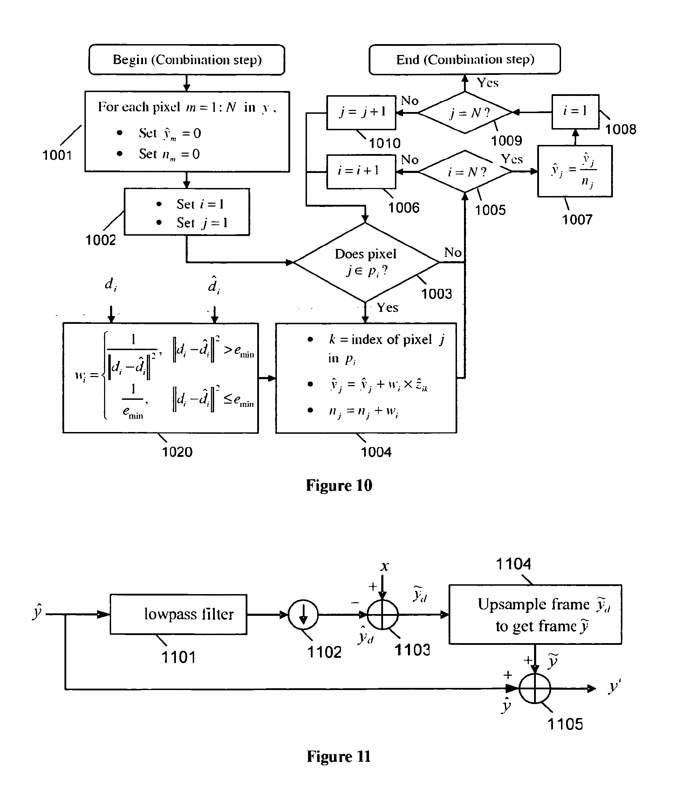

Figure 10 is a flow diagram of one embodiment of a process for combining all processed sub-frames to form frame $\hat{y}$. The process is performed by processing logic that may comprise hardware (circuitry, dedicated logic, etc.), software (such as is run on a general purpose computer system or a dedicated machine), or a combination of both.

Referring to Figure 10, the process begins by setting its value $\hat{y}_m$ and its normalizing factor $n_m$ to zero for each pixel $m$ = 1:$N$ in frame y (processing block 1001). Next, processing logic initializes the pixel index $j$ and the sub-frame index $i$ to one (processing block 1002).

After initialization, processing logic determines whether pixel $j \in p_i$ (processing block 1003). If it is, the process transitions to processing block 1004. If not, process transitions to processing block 1005.

At processing block 1004, in one embodiment, processing logic updates $\hat{y}_j$ and $n_j$ using $\hat{z}_{ik}$, the value of the pixel $j$ in $\hat{z}_i$, and using waiting factor $w_i$ calculated using $d_i$ and $\hat{d}_i$. In one embodiment, the waiting factor is calculated according to the following:

$$w_i = \begin{cases} \dfrac{1}{\left\| d_i - \hat{d}_i \right\|^2}, & \left\| d_i - \hat{d}_i \right\|^2 > e_{\min} \\[2em] \dfrac{1}{e_{\min}}, & \left\| d_i - \hat{d}_i \right\|^2 \le e_{\min} \end{cases}$$

In processing block 1004, $k$ is equal to the index of pixel $j$ in $p_i$. In one embodiment, processing logic updates $\hat{y}_j$ and $n_j$ based on the following equation:

$$\hat{y}_j = \hat{y}_j + w_i \times \hat{z}_{ik}$$

$$n_j = n_j + w_i$$

After processing logic updates $\hat{y}_j$ and $n_j$, the process transitions to processing block 1005.

At processing block 1005, processing logic checks whether the index $i = N$, the total number of pixels in the frame. If so, the process transitions to processing block 1007. If not, the process transitions to processing block 1006. At processing block 1006, the index is incremented by one and the process transitions to processing block 1003.

At processing block 1007, processing logic updates $\hat{y}_j$ according to the following equation:

$$\hat{y}_j = \frac{\hat{y}_j}{n_j}.$$

After updating $\hat{y}_j$, processing logic sets the index $i$ equal to 1 (processing block 1008) and checks whether the index $j$ is equal to N (processing block 1009). If it is, the process ends. If not, the process transitions to processing block 1010 where the index $j$ is incremented by one. After incrementing the index $j$ by one, the process transitions to processing block 1003.

In the case of video, in one embodiment, the combination operation also includes an estimate based on the previous frame to emulate an autoregressive process. This ensures smooth video playback in regions with a lot high-frequency detail. This is mathematically represented as:

$$\hat{y} = \alpha \hat{y}_{prev} + (1-\alpha)\hat{y},$$

where $\alpha$ represents the autoregression coefficient. In one embodiment, $\alpha = 0.5$. In another embodiment, $\alpha$ can be part of the side-information and $\hat{y}_{prev}$ is the estimate of the previous frame corrected for scene motion between current frame and previous frame.

*The Data Consistency Operation*

The data consistency operation preserves the relevant signal content such that the original low-resolution image/video is recoverable from the high-resolution image/video. Thus, the data of the high-resolution image/video produced by the super-resolution technique is consistent with the low-resolution image/video.

In one embodiment, the frame $y'$ is set equal to the frame $\hat{y}$ and $y'$ is considered the enhanced quality estimate or the super-resolution estimate (if the data consistency step is not used).

In another embodiment, the frame $\hat{y}$ is processed by a data consistency step that outputs $y'$, which is considered the super-resolution estimate. This operation ensures that the downsampling of $y'$ using the modeled lowpass filter results in the input image/video frame x.

In one embodiment, the modeled lowpass filter is used to downsample $\hat{y}$ to get $\hat{y}_d$. A difference frame $\hat{y}_d$ is calculated using

$$\tilde{y}_d = x - \hat{y}_d.$$

An upsampled version, $\tilde{y}$, is formed using the same process that produced y from x. The super-resolution estimate is formed as

$$y' = \hat{y} + \tilde{y}.$$

Figure 11 is a dataflow diagram of one embodiment of a data consistency operation. The blocks in Figure 11 and their associated operations may comprise hardware (circuitry, dedicated logic, etc.), software (such as is run on a general purpose computer system or a dedicated machine), or a combination of both. Referring to Figure 11, modeled lowpass filter 1101 filters the combined frame $\hat{y}$ and downsampler 1102 downsamples the filtered output to form $\hat{y}_d$. A substractor 1103 subtracts $\hat{y}_d$, from input frame $x$ to form a difference frame $(\tilde{y}_d)$ at low resolution. Upsampler 1104 upsamples the difference frame $\tilde{y}_d$, using the process shown in Figure 3 to obtain the upsampled version $\tilde{y}$. Adder 1105 adds the upsampled version $\tilde{y}$ to $\hat{y}$ to form the super-resolution estimate $y'$.

*Iterations*

The enhanced quality/super-resolution estimate $y'$ can be further refined by iterating over the entire process as illustrated in Figure 2. The number of iterations $(N_I)$ can be any integer greater than zero. The master threshold $\overline{T}$ is updated and the frame $y'$ is copied into frame $y$. The master threshold can be any positive real value and can be updated in any of the following ways:

Linear option: $\overline{T} = \min(\overline{T} - \Delta, 0)$, where $\Delta$ is a constant chosen apriori. MSE option: $\overline{T} = f\left(\overline{T}, \sum_{j=1}^{N} \left\| d_j - \hat{d}_j \right\|^2 \right),$

where $f(\,)$ represents a function.

In one embodiment, the number of iterations $(N_I)$ and the master threshold $\overline{T}$ for each of the iterations are included as part of the side-information. In one embodiment, the number of iterations $(N_I)$ is an integer between 1 and 4 and the master threshold is set at 100 for the first iteration and $\Delta = \dfrac{100}{N_I}$. For example, if $N_I$ is equal to 2, the master thresholds for the two iterations are 100 and 50. Thus, in one embodiment, the number of thresholds is two and the master threshold is reduced in the second iteration.

Applications

The quality enhancement and super-resolution techniques have diverse applications in the processing, coding and display of images and/or video. Generally, these techniques can be used to enhance low-quality, low-resolution images and/or videos to high-quality, low-/high-resolution.

More specifically, with respect to broadcast video, broadcast programming aimed at devices having displays that only handle low-resolution videos (e.g., mobile phones) can also be used in stationary environments where high-resolution displays such as televisions are available. Also for phones with high-resolution displays, content available at low resolution, such as that for mobile phones having displays that only handle low-resolution videos, can be processed to match the higher resolution of the phone's high-resolution display. In one embodiment, a low-resolution video signal is broadcast to one or more mobile phones, which displays the low-resolution video signal. The mobile phone includes the functionality described herein to convert the low-resolution video to high-resolution video and display the high-resolution video itself and/or send the high resolution video to a high resolution display, such as a television. In one embodiment, the mobile phone transmits the high-resolution video to a television using local wireless transmission. In another embodiment, the cell phone sends the low-resolution video to a docking station that uses the techniques described herein to convert the low-resolution video to high-resolution video and transmit them to the high resolution display.

Another application of the techniques described herein is for video quality enhancement in a network. For example, videos captured by a mobile phone camera are of low-quality and low-resolution. The techniques described can be used in a network to enhance these videos to high-quality and high-resolution. The captured videos can be uploaded, via a network, to a server or other processor-based system for enhancement using the techniques disclosed herein (e.g., reducing compression artifacts, increasing resolution, etc.), and thereafter, users can download the enhanced videos from the network.

Another application is fractional-pel motion compensation in video coding which provides significant gains in compression efficiency. To do fractional-pel motion compensation, the input image/video should be interpolated to get the intensity values at fractional pixel locations. The super-resolution technique can be used to do the interpolation.

Similarly, images taken by mobile phone and shared through a network are often not of good quality. When sharing, the images at a low quality, low resolution are sent through the network, the bandwidth usage is reduced in comparison to sending such images at a higher quality and/or resolution level. Then, after transmission, the quality of these images can be improved using the techniques described herein to achieve "print" quality or better, particularly where a user wishes to print one such image. Also, the quality of video conferencing can be improved by using the techniques described herein. More specifically, a terminal being used to communicate as one of the video conferencing participants can be equipped with the functionality described herein and thus is able to show the conferencing video at a higher zoom level and/or with improved quality.

The video quality enhancement technique can also be used as a loop filter in a video decoder to improve compression efficiency.

Examples of Advantages

Embodiments of the invention achieve high quality of performance compared to related art. Embodiments of the invention are applicable to a wide variety of image/video content with smooth regions, texture and edges in all directions. Embodiments of the invention are not limited to regions with horizontal or vertical edges. Embodiments of the invention adapt its parameters based on local pixel statistics. Embodiments of the invention can use side-information from the image/video source whenever possible. Embodiments of the invention needs less iteration and incurs lower computational complexity.

An Example of a Computer System

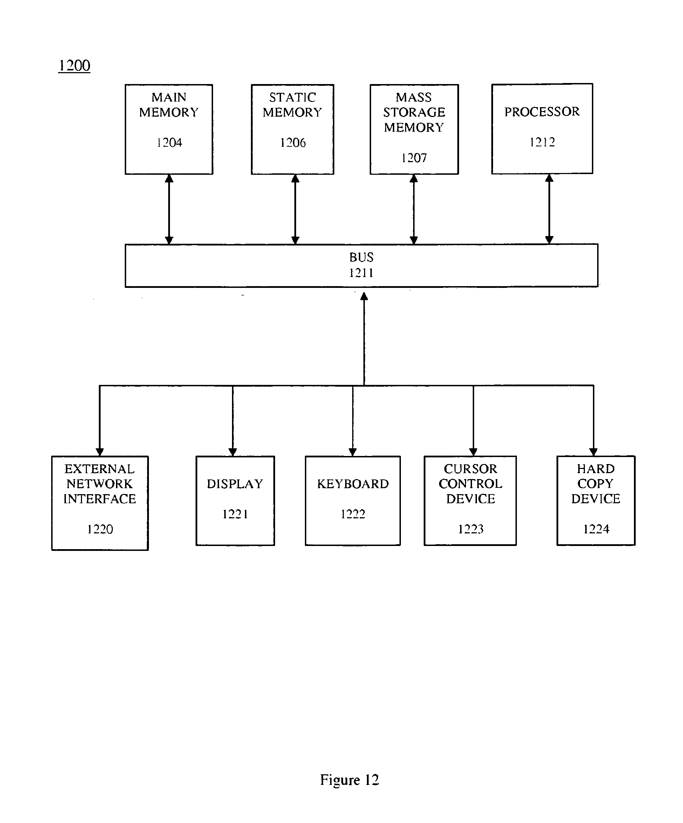

Figure 12 is a block diagram of an exemplary computer system that may perform one or more of the operations described herein. Referring to Figure 12, computer system 1200 may comprise an exemplary client or server computer system. Computer system 1200 comprises a communication mechanism or bus 1211 for communicating information, and a processor 1212 coupled with bus 1211 for processing information. Processor 1212 includes a microprocessor, but is not limited to a microprocessor, such as, for example, Pentium™, PowerPC™, Alpha™, etc.

System 1200 further comprises a random access memory (RAM), or other dynamic storage device 1204 (referred to as main memory) coupled to bus 1211 for storing information and instructions to be executed by processor 1212. Main memory 1204 also may be used for storing temporary variables or other intermediate information during execution of instructions by processor 1212.

Computer system 1200 also comprises a read only memory (ROM) and/or other static storage device 1206 coupled to bus 1211 for storing static information and instructions for processor 1212, and a data storage device 1207, such as a magnetic disk or optical disk and its corresponding disk drive. Data storage device 1207 is coupled to bus 1211 for storing information and instructions.

Computer system 1200 may further be coupled to a display device 1221, such as a cathode ray tube (CRT) or liquid crystal display (LCD), coupled to bus 1211 for displaying information to a computer user. An alphanumeric input device 1222, including alphanumeric and other keys, may also be coupled to bus 121 for communicating information and command selections to processor 1212. An additional user input device is cursor control 1223, such as a mouse, trackball, trackpad, stylus, or cursor direction keys, coupled to bus 1211 for communicating direction information and command selections to processor 1212, and for controlling cursor movement on display 1221.

Another device that may be coupled to bus 121 is hard copy device 1224, which may be used for marking information on a medium such as paper, film, or similar types of media. Another device that may be coupled to bus 1211 is a wired/wireless communication capability 1225 to communication to a phone or handheld palm device.

Note that any or all of the components of system 1200 and associated hardware may be used in the present invention. However, it can be appreciated that other configurations of the computer system may include some or all of the devices.

The present invention is not limited to personal computer and laptop computers. The present invention is applicable to mobile phones, smart phones, PDAs, portable players, etc.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

**Claims**

1. A method comprising:

   receiving a first version of an image signal at a first resolution; and
   iteratively creating a second version of the image signal at a second resolution higher than or equal to the first resolution using at least one warped transform and spatially adaptive thresholding, wherein creating a second version of the image signal comprises:

      selecting sub-frames (202) of a frame in the first version of the image signal, the sub-frame being either regular (602) or adaptive, by minimizing the warped row variance (603),
      adaptively selecting the at least one warped transform (203) for a sub-frame selected at each pixel,
      applying the at least one warped transform to the sub-frame to create transform coefficients, wherein support of the transform basis of the at least one warped transform is warped to match the sub-frame shape, and the sub-frame shape is determined based on measured statistics for each possible shape,
      performing spatially adaptive thresholding on the transform coefficients by applying at least one spatially adaptive threshold to the transform coefficients (204), wherein the threshold value adapts such that high-frequency detail in the frame is preserved,
      applying an inverse transform (205) to threshold coefficients, combining all the processed sub-frames in a weighted fashion to form an output frame of the second version of the signal (206), and
      determining whether more iterations are needed (208).

2. The method defined in Claim 1 further comprising upsampling (201) the first version of the image signal, and further wherein applying the at least one warped transform to a sub-frame to create transform coefficients comprises applying a transform to each of the selected sub-frames in the frame.

3. The method defined in Claim 1 wherein the sub-frames (202) are adaptively selected at each pixel in the frame.

4. The method defined in Claim 1 wherein adaptively selecting the at least one transform for a sub-frame selected at each pixel is based on a threshold.

5. The method defined in Claim 1 wherein the first version of the image signal is a video received from over a network by a terminal, and the terminal creates the second version for display thereon.

6. The method defined in Claim 1 wherein creating a second version of the image signal comprises:

upsampling (201) the first version of the image signal to create an upsampled image prior to applying the at least one warped transform; and
applying (207) a data-consistency operation to the output frame.

7. The method defined in Claim 6 further comprising setting a sub-frame type for the sub-frame to be regular, non-warped at every pixel.

8. The method defined in Claim 6 further comprising selecting a sub-frame adaptively at each pixel in the upsampled image.

9. The method defined in Claim 6 further comprising computing one of more adaptive thresholds, and wherein thresholding transform coefficients for each transformed sub-frame with an adaptive threshold comprises thresholding transform coefficients for each transformed sub-frame with one of the one or more adaptive thresholds.

10. The method defined in Claim 6 wherein adaptively selecting the at least one transform for a sub-frame selected at each pixel is based on a threshold.

11. The method defined in Claim 6 further comprising sending additional information that includes one or more of a group consisting of: sub-frame type for each pixel; parameters of an upsampling filter; parameters of a low-pass filter, choice of a transform, and thresholding parameters.

12. The method defined in Claim 6 further comprising iteratively repeating the operations used to create the second version of the image signal for creating a third version of the image signal.

13. The method defined in Claim 6 wherein applying the data-consistency operation to the new frame comprises:

applying a modeled low pass filter to downsample the new frame;
calculating a difference frame by subtracting the downsampled frame from the first version of the media;
upsampling the difference frame to form a upsampled difference frame; and
adding the upsampled difference frame to the new frame.

14. The method defined in Claim 6 wherein the adaptive threshold is computed based on master threshold.

15. The method defined in Claim 1 wherein creating a second version of the image signal comprises:

upsampling (201) the first version of the image signal prior to selecting subframes; and
applying (207) a data-consistency operation to the output frame.

16. The method defined in Claim 1 wherein the first version of the image signal at the first resolution is generated in a video decoder (104) and creating the second version of the image signal is performed as part of a post processing operation in the video decoder (104).

17. The method defined in Claim 1 wherein the first version of the image signal is received by a mobile device in response to being transmitted in a wireless communication system, and further comprising sending the second version of the image signal to a high resolution display (107) for display thereon.

18. The method defined in Claim 17 wherein the mobile device creates the second version and sends the second version to the high resolution display (107).

19. The method defined in Claim 17 wherein the mobile device sends the first version to a docking station, and the docking station creates the second version and sends the second version to the high resolution display.

20. An article of manufacture having one or more computer readable storage media storing instructions therein which, when executed by a system, cause the system to perform a method defined in any of Claims 1-19 above.

**Patentansprüche**

1. Verfahren, das Folgendes beinhaltet:

   Empfangen einer ersten Version eines Bildsignals mit einer ersten Auflösung; und
   iteratives Erzeugen einer zweiten Version des Bildsignals mit einer zweiten Auflösung, die gleich oder höher ist als die erste Auflösung, mittels wenigstens einer verzerrten Transformation und räumlich adaptiver Schwellenwertbildung, wobei das Erzeugen einer zweiten Version des Bildsignals Folgendes beinhaltet:

   Auswählen von Subframes (202) eines Frame in der ersten Version des Bildsignals, wobei der Subframe entweder regelmäßig (602) oder adaptiv ist, durch Minimieren der Verzerrte-Reihe-Varianz (603),
   adaptives Wählen der wenigstens einen verzerrten Transformation (203) für einen an jedem Pixel gewählten Subframe,
   Anwenden der wenigstens einen verzerrten Transformation auf den Subframe zum Erzeugen von Transformationskoeffizienten, wobei Unterstützung der Transformationsbasis der wenigstens einen verzerrten Transformation verzerrt ist, so dass sie der Form des Subframe entspricht, und die Form des Subframe auf der Basis von gemessenen Statistiken für jede mögliche Form ermittelt wird,
   Ausführen von räumlich adaptiver Schwellenwertbildung an den Transformationskoeffizienten durch Anwenden wenigstens eines räumlich adaptiven Schwellenwerts auf die Transformationskoeffizienten (204), wobei der Schwellenwert so angepasst wird, dass Hochfrequenzdetail im Frame konserviert wird,
   Anwenden einer Umkehrtransformation (205) auf Schwellenkoeffizienten, unter Kombination aller verarbeiteten Subframes auf eine gewichtete Weise, um einen Ausgangsframe der zweiten Version des Signals (206) zu bilden, und
   Ermitteln, ob weitere Iterationen nötig (208) sind.

2. Verfahren nach Anspruch 1, das ferner das Upsampling (201) der ersten Version des Bildsignals beinhaltet, und wobei ferner das Anwenden der wenigstens einen verzerrten Transformation auf einen Subframe zum Erzeugen von Transformationskoeffizienten das Anwenden einer Transformation auf jeden der gewählten Subframes in dem Frame beinhaltet.

3. Verfahren nach Anspruch 1, wobei die Subframes (202) an jedem Pixel in dem Frame adaptiv gewählt werden.

4. Verfahren nach Anspruch 1, wobei das adaptive Auswählen der wenigstens einen Transformation für einen an jedem Pixel gewählten Subframe auf einem Schwellenwert basiert.

5. Verfahren nach Anspruch 1, wobei die erste Version des Bildsignals ein von einem Endgerät über ein Netzwerk empfangenes Video ist und das Endgerät die zweite Version zur Anzeige darauf erzeugt.

6. Verfahren nach Anspruch 1, wobei das Erzeugen einer zweiten Version des Bildsignals Folgendes beinhaltet:

   Upsampling (201) der ersten Version des Bildsignals zum Erzeugen eines abtastratenerhöhten (upsampled) Bildes vor dem Anwenden der wenigstens einen verzerrten Transformation; und
   Anwenden (207) eines Datenkonsistenzvorgangs auf den Ausgangsframe.

7. Verfahren nach Anspruch 6, das ferner das Einstellen eines Subframetyps für den Subframe beinhaltet, so dass er regelmäßig, unverzerrt an jedem Pixel ist.

8. Verfahren nach Anspruch 6, das ferner das adaptive Auswählen eines Subframe an jedem Pixel in dem abtastratenerhöhten Bild beinhaltet.

9. Verfahren nach Anspruch 6, das ferner das Berechnen von einem oder mehreren adaptiven Schwellenwerten beinhaltet, und wobei das Schwellenwertbilden an Transformationskoeffizienten für jeden transformierten Subframe mit einem adaptiven Schwellenwert das Schwellenwertbilden an Transformationskoeffizienten für jeden transformierten Subframe mit einem der ein oder mehreren adaptiven Schwellenwerte beinhaltet.

10. Verfahren nach Anspruch 6, wobei das adaptive Auswählen der wenigstens einen Transformation für einen an jedem Pixel gewählten Subframe auf einem Schwellenwert basiert.

**11.** Verfahren nach Anspruch 6, das ferner das Senden zusätzlicher Informationen beinhaltet, die eine oder mehrere aus einer Gruppe bestehend aus: Subframetyp für jedes Pixel; Parameter eines Upsampling-Filters; Parameter eines Tiefpassfilters, Wahl einer Transformation und Schwellenwertbildungsparameter beinhalten.

**12.** Verfahren nach Anspruch 6, das ferner das iterative Wiederholen der zum Erzeugen der zweiten Version des Bildsignals benutzten Vorgänge beinhaltet, um eine dritte Version des Bildsignals zu erzeugen.

**13.** Verfahren nach Anspruch 6, wobei das Anwenden des Datenkonsistenzvorgangs auf den neuen Frame Folgendes beinhaltet:

Anwenden eines modellierten Tiefpassfilters zum Ausführen von Downsampling an dem neuen Frame;
Berechnen eines Differenzframe durch Subtrahieren des abtastratenverringerten (downsampled) Frame von der ersten Version der Medien;
Upsampling des Differenzframe zum Bilden eines abtastratenerhöhten Differenzframe; und
Hinzufügen des abtastratenerhöhten Differenzframe zu dem neuen Frame.

**14.** Verfahren nach Anspruch 6, wobei der adaptive Schwellenwert auf der Basis eines Master-Schwellenwertes berechnet wird.

**15.** Verfahren nach Anspruch 1, wobei das Erzeugen einer zweiten Version des Bildsignals Folgendes beinhaltet:

Upsampling (201) der ersten Version des Bildsignals vor dem Wählen von Subframes; und
Anwenden (207) eines Datenkonsistenzvorgangs auf den Ausgangsframe.

**16.** Verfahren nach Anspruch 1, wobei die erste Version des Bildsignals mit der ersten Auflösung in einem Video-Decoder (104) erzeugt wird und das Erzeugen der zweiten Version des Bildsignals als Teil eines Nachverarbeitungsvorgangs in dem Video-Decoder (104) durchgeführt wird.

**17.** Verfahren nach Anspruch 1,
wobei die erste Version des Bildsignals von einem mobilen Gerät als Reaktion darauf empfangen wird, dass es in einem drahtlosen Kommunikationssystem gesendet wurde, und das ferner das Senden der zweiten Version des Bildsignals zu einem Hochauflösungsdisplay (107) zur Anzeige darauf beinhaltet.

**18.** Verfahren nach Anspruch 17, wobei das mobile Gerät die zweite Version erzeugt und die zweite Version zu dem Hochauflösungsdisplay (107) sendet.

**19.** Verfahren nach Anspruch 17, wobei das mobile Gerät die erste Version zu einer Docking-Station sendet und die Docking-Station die zweite Version erzeugt und die zweite Version zu dem Hochauflösungsdisplay sendet.

**20.** Herstellungsartikel mit einem oder mehreren computerlesbaren Speichermedien, in denen Befehle gespeichert sind, die bei Ausführung durch ein System bewirken, dass das System ein Verfahren wie in einem der Ansprüche 1-19 oben definiert ausführt.

**Revendications**

**1.** Un procédé comprenant :

la réception d'une première version d'un signal d'image à une première résolution, et
la création itérative d'une deuxième version du signal d'image à une deuxième résolution plus élevée ou égale à la première résolution au moyen d'au moins une transformation gauchie et une fixation de seuil spatialement adaptatif, où la création d'une deuxième version du signal d'image comprend :

la sélection de sous-trames (202) d'une trame dans la première version du signal d'image, la sous-trame étant soit régulière (602) ou adaptive, par la minimisation de la variance de ligne gauchie (603),
la sélection adaptative de la au moins une transformation gauchie (203) pour une sous-trame sélectionnée au niveau de chaque pixel,
l'application de la au moins une transformation gauchie à la sous-trame de façon à créer des coefficients de transformation, où un support de la base de transformation de la au moins une transformation gauchie est gauchi de façon à correspondre à la forme de la sous-trame, et la forme de la sous-trame est déterminée en fonction de statistiques mesurées pour chaque forme possible,

l'exécution d'une fixation de seuil spatialement adaptatif sur les coefficients de transformation par l'application d'au moins un seuil spatialement adaptatif aux coefficients de transformation (204), où la valeur de seuil s'adapte de sorte que les détails haute fréquence dans la trame soient conservés,

l'application d'une transformation inverse (205) aux coefficients de seuil, la combinaison de toutes les sous-trames traitées d'une manière pondérée de façon à former une trame de sortie de la deuxième version du signal (206), et

la détermination si plus d'itérations sont nécessaires (208).

2. Le procédé selon la Revendication 1 comprenant en outre le suréchantillonnage (201) de la première version du signal d'image, et en outre où l'application de la au moins une transformation gauchie à une sous-trame de façon à créer des coefficients de transformation comprend l'application d'une transformation à chaque sous-trame des sous-trames sélectionnées dans la trame.

3. Le procédé selon la Revendication 1 où les sous-trames (202) sont sélectionnées de manière adaptative au niveau de chaque pixel dans la trame.

4. Le procédé selon la Revendication 1 où la sélection adaptative de la au moins une transformation pour une sous-trame sélectionnée au niveau de chaque pixel est basée sur un seuil.

5. Le procédé selon la Revendication 1 où la première version du signal d'image est une vidéo reçue par l'intermédiaire d'un réseau par un terminal, et le terminal crée la deuxième version pour un affichage sur celui-ci.

6. Le procédé selon la Revendication 1 où la création d'une deuxième version du signal d'image comprend :

le suréchantillonnage (201) de la première version du signal d'image de façon à créer une image suréchantillonnée avant l'application de la au moins une transformation gauchie, et

l'application (207) d'une opération de cohérence de données à la trame de sortie.

7. Le procédé selon la Revendication 6 comprenant en outre la définition d'un type de sous-trame de sorte que la sous-trame soit régulière, non gauchie au niveau de chaque pixel.

8. Le procédé selon la Revendication 6 comprenant en outre la sélection d'une sous-trame de manière adaptative au niveau de chaque pixel dans l'image suréchantillonnée.

9. Le procédé selon la Revendication 6 comprenant en outre le calcul d'un ou de plusieurs seuils adaptatifs, et où la fixation de seuil de coefficients de transformation pour chaque sous-trame transformée avec un seuil adaptatif comprend la fixation de seuil de coefficients de transformation pour chaque sous-trame transformée avec un seuil des un ou plusieurs seuils adaptatifs.

10. Le procédé selon la Revendication 6 où la sélection adaptative de la au moins une transformation pour une sous-trame sélectionnée au niveau de chaque pixel est basée sur un seuil.

11. Le procédé selon la Revendication 6 comprenant en outre l'envoi d'informations additionnelles qui comprennent un ou plusieurs éléments d'un groupe se composant d'un type de sous-trame pour chaque pixel, de paramètres d'un filtre de suréchantillonnage, de paramètres d'un filtre passe-bas, d'un choix de transformation et de paramètres de fixation de seuil.

12. Le procédé selon la Revendication 6 comprenant en outre la répétition itérative des opérations utilisées de façon à créer la deuxième version du signal d'image pour la création d'une troisième version du signal d'image.

13. Le procédé selon la Revendication 6 où l'application de l'opération de cohérence de données à la nouvelle trame comprend :

l'application d'un filtre passe-bas modélisé de façon à sous-échantillonner la nouvelle trame,

le calcul d'une trame de différence par la soustraction de la trame sous-échantillonnée de la première version du support,
le suréchantillonnage de la trame de différence de façon à former une trame de différence suréchantillonnée, et
l'ajout de la trame de différence suréchantillonnée à la nouvelle trame.

14. Le procédé selon la Revendication 6 où le seuil adaptatif est calculé en fonction d'un seuil maître.

15. Le procédé selon la Revendication 1 où la création d'une deuxième version du signal d'image comprend :

le suréchantillonnage (201) de la première version du signal d'image avant la sélection de sous-trames, et
l'application (207) d'une opération de cohérence de données à la trame de sortie.

16. Le procédé selon la Revendication 1 où la première version du signal d'image à la première résolution est générée dans un décodeur vidéo (104) et la création de la deuxième version du signal d'image est exécutée dans le cadre d'une opération de post-traitement dans le décodeur vidéo (104).

17. Le procédé selon la Revendication 1
où la première version du signal d'image est reçue par un dispositif mobile en réponse à une transmission dans un système de communication sans fil, et comprenant en outre l'envoi de la deuxième version du signal d'image vers un dispositif d'affichage haute résolution (107) pour un affichage sur celui-ci.

18. Le procédé selon la Revendication 17 où le dispositif mobile crée la deuxième version et envoie la deuxième version au dispositif d'affichage haute résolution (107).

19. Le procédé selon la Revendication 17 où le dispositif mobile envoie la première version à une station d'accueil, et la station d'accueil crée la deuxième version et envoie la deuxième version au dispositif d'affichage haute résolution.

20. Un article manufacturé possédant un ou plusieurs supports à mémoire lisibles par ordinateur contenant en mémoire des instructions qui, lorsqu'elles sont exécutées par un système, amènent le système à exécuter un procédé selon l'une quelconque des Revendications 1 à 19 ci-dessus.

Receive a first version of media
(e.g., an image, a video, etc.)
at a first resolution
130

Create a second version of the media at a
second resolution higher than or equal to the first
resolution using at least one warped
transform and adaptive thresholding
131

Figure 1A

**Figure 1B**

**Figure 1C**

```
                    Begin
                (Input frame x)
                        |
                        v
      Upsample frame x to get frame y          201
              (Optional)
                        |
                        v
   For each pixel i = 1 : N,                    202
      • Select a sub-frame z_i with pixel
        i as pivot.
                        |
                        v
      • Select a sparse transform H_i
        and compute d_i
                                                203
                        |
                        v
      • Apply master threshold T̄ on
        d_i to get d̄_i
      • Compute adaptive threshold T̂_i
      • Apply threshold T̂_i on d_i to get
        d̂_i
                                                204
                        |
                        v
      • ẑ_i = H_i^{-1} × d̂_i                    205
```

$y = y'$     211          Compute new $\bar{T}$     220

Combine all processed sub-frames
$\hat{z}_{1:N}$ to form frame $\hat{y}$     206

$y' = \hat{y} + \tilde{y}$
Compute $\tilde{y}$ such that downsampling $y'$
gives $x$
(Optional)     207

More iterations?     Yes     208

No

Output $y'$     209

End

**Figure 2**

Parameters of lowpass filter

Input frame *x*

$\uparrow$ — 311

Is the lowpass filter modeled as the LL band of a wavelet filter?    Yes →    Inverse Wavelet Filter

301

303

Input frame *x*

$\uparrow$

310

No

Pixel-adaptive Wiener Filter

302

**Frame** *y*

**Figure 3**

4A

4B

4C

4D

4E

4F

4G

4H

4I

4J

4K

4L

4M

**Sub-frame $z_i$**

**Figure 5**

**Figure 6**

Sub-frame $z_i$ ⟶ **Adaptive transform?** 701

No ⟶ 1. Choose DCT as $H_i$
2. $d_i = H_i \times z_i$ 702

Yes

Library of transforms $\{H^1, H^2, ...\}$ 704

For each transform $H^j$, compute the transform coefficients $d^j$
$$d^j = H^j \times z_i$$ 703

$\overline{T}$ ⟶ For each $j$, count the number of coefficients in $d^j$ with absolute value greater than $\overline{T}$ 705

1. Choose the transform with least count $H^k$ ; $H_i = H^k$
2. $d_i = d^k$ 706

**Figure 7**

$\overline{T}$ ⟶

$d_i$ ⟶

For each element $d_{ij} \in d_i$, compute the corresponding element $\overline{d}_{ij} \in \overline{d}_i$
$$\overline{d}_{ij} = \begin{cases} d_{ij}, & |d_{ij}| \geq \overline{T} \\ 0, & |d_{ij}| < \overline{T} \end{cases}$$ 801

**Adaptive thresholds?** 802

No ⟶ $\hat{d}_i = \overline{d}_i$ 803

Yes

$$\hat{T}_i = \overline{T} \times f\left(\left\| d_i - \overline{d}_i \right\|^2\right)$$ 804

For each element $d_{ij} \in d_i$, compute the corresponding element $\hat{d}_{ij} \in \hat{d}_i$
$$\hat{d}_{ij} = \begin{cases} d_{ij}, & |d_{ij}| \geq \hat{T}_i \\ 0, & |d_{ij}| < \hat{T}_i \end{cases}$$ 805

**Figure 8**

Figure 9

Begin (Combination step)

End (Combination step)

For each pixel $m = 1:N$ in $y$,
- Set $\hat{y}_m = 0$
- Set $n_m = 0$

1001

1002
- Set $i = 1$
- Set $j = 1$

$j = j + 1$

1010

No

$j = N\,?$

Yes

1009

$i = 1$

1008

$i = i + 1$

No

$i = N\,?$

Yes

1006

1005

$\hat{y}_j = \dfrac{\hat{y}_j}{n_j}$

1007

Does pixel $j \in p_i\,?$

No

1003

Yes

$d_i$          $\hat{d}_i$

$$w_i = \begin{cases} \dfrac{1}{\left\| d_i - \hat{d}_i \right\|^2}, & \left\| d_i - \hat{d}_i \right\|^2 > e_{\min} \\[2mm] \dfrac{1}{e_{\min}}, & \left\| d_i - \hat{d}_i \right\|^2 \le e_{\min} \end{cases}$$

1020

- $k$ = index of pixel $j$ in $p_i$
- $\hat{y}_j = \hat{y}_j + w_i \times \hat{z}_{ik}$
- $n_j = n_j + w_i$

1004

**Figure 10**

$\hat{y}$ → lowpass filter → ↓ → $-$ ⊕ $\tilde{y}_d$ → Upsample frame $\tilde{y}_d$ to get frame $\tilde{y}$ → ⊕ → $y'$

$x$
$+$
1101
1102
$\hat{y}_d$
1103
1104
$\tilde{y}$
$+$
$+$
$\hat{y}$
1105

**Figure 11**

1200

Figure 12

A

B

C

D

E

**Figure 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Digital Image Processing. **GONZALEZ ; WOODS.** Pearson Education
- ITU-T Recommendation H.264 & ISO/IEC 14496-10 (MPEG-4) AVC. *Advanced Video Coding for Generic Audiovisual Services*
- **VATIS ; OSTERMANN.** Locally Adaptive Non-Separable Interpolation Filter for H.264/AVC. *IEEE ICIP,* October 2006

- **GULERYUZ.** Predicting Wavelet Coefficients Over Edges Using Estimates Based on Nonlinear Approximants. *Proc. Data Compression Conference,* April 2004
- **C.S. BOON et al.** Sparse super-resolution reconstructions of video from mobile devices in digital TV broadcast application. *PROC. OF THE SPIE, USA,* 15 August 2006, vol. 6312, 63120M-1, 63120M-12